# EUROPEAN PATENT APPLICATION

(11) **EP 4 439 262 A1**
(43) Date of publication of application: **02.10.2024**
(21) Application number: 22897892.0
(22) Date of filing: 24.11.2022
(51) Int. Cl.: G06F 3/04817, G06F 3/0488, G06F 40/166

(54) **FILE EDITING PROCESSING METHOD AND APPARATUS, AND ELECTRONIC DEVICE**

(30) Priority: 24.11.2021 CN 202111403666
(71) Applicant: Vivo Mobile Communication Co., Ltd., Dongguan, Guangdong 523863 (CN)
(72) Inventor: HAN, Tong, Dongguan, Guangdong 523863 (CN)
(74) Representative: Conti, Marco
(86) International application number: PCT/CN2022/134066
(87) International publication number: WO 2023/093809

(57) **Abstract**

This application discloses a file editing processing method and apparatus and an electronic device, belonging to the field of communication technology. The method includes: displaying a target interface, where the target interface includes a target object and a functional control, and the functional control corresponds to at least one function; receiving a first input for a first control in the functional control; in response to the first input, displaying a target icon and updating a display position of the target icon; where the target icon corresponds to a same function as the first control; and in a case that the target icon at least partially overlaps with a first object in the target object, setting the first object according to the function corresponding to the target icon.

## Description

### CROSS-REFERENCE TO RELATED APPLICATIONS

This application claims priority to Chinese Patent Application No. 202111403666.8, filed in China on November 24, 2021, which is incorporated herein by reference in its entirety.

### TECHNICAL FIELD

This application pertains to the field of communication technology, specifically relating to a file editing processing method and apparatus and an electronic device.

### BACKGROUND

With the rapid development of communication technology, the functionality of mobile terminals has become increasingly diversified, bringing great convenience to people's lives. In particular, users can edit files on mobile terminals anytime and anywhere.

However, the existing methods of text and image editing on mobile terminals have followed the logic of computers. Due to insufficient consideration of the interaction characteristics of mobile terminals, such as small screens and imprecise touch control by fingers, users often encounter difficulties in operation.

### SUMMARY

The purpose of the embodiments of this application is to provide a file editing processing method and apparatus and an electronic device that can solve the problem of difficult operations in existing processing methods.

According to a first aspect, an embodiment of this application provides a file editing processing method, including:
displaying a target interface, where the target interface includes a target object and a functional control, and the functional control corresponds to at least one function;
receiving a first input for a first control in the functional control;
in response to the first input, displaying a target icon and updating a display position of the target icon; where the target icon corresponds to a same function as the first control; and
in a case that the target icon at least partially overlaps with a first object in the target object, setting the first object according to the function corresponding to the target icon.

According to a second aspect, an embodiment of this application provides a file editing processing apparatus, including:
a first display module configured to display a target interface, where the target interface includes a target object and a functional control, and the functional control corresponds to at least one function;
a first reception module configured to receive a first input for a first control in the functional control;
a second display module configured to, in response to the first input, display a target icon and update a display position of the target icon; where the target icon corresponds to a same function as the first control; and
a first processing module configured to, in a case that the target icon at least partially overlaps with a first object in the target object, set the first object according to the function corresponding to the target icon.

According to a third aspect, an embodiment of this application provides an electronic device, where the electronic device includes a processor and a memory, the memory stores a program or instructions capable of running on the processor, and when the program or instructions are executed by the processor, the steps of the method according to the first aspect are implemented.

According to a fourth aspect, an embodiment of this application provides a readable storage medium, where the readable storage medium stores a program or instructions, and when the program or instructions are executed by a processor, the steps of the method according to the first aspect are implemented.

According to a fifth aspect, an embodiment of this application provides a chip, where the chip includes a processor and a communication interface, the communication interface is coupled to the processor, and the processor is configured to execute a program or instructions to implement the steps of the method according to the first aspect.

According to a sixth aspect, an embodiment of this application provides a computer program product, where the computer program product is stored in a non-transient storage medium, and the computer program or program product is executed by at least one processor to implement the steps of the method according to the first aspect.

In the embodiments of this application, first, a target interface including a target object and a functional control is displayed, then, in response to a first input received, for the user-selected first control, a target icon is displayed and a display position of the target icon is updated, and in a case that the target icon at least partially overlaps with the first object in the target object, the first object is set according to a function corresponding to the target icon, that is, the function corresponding to the first control. This takes into account the characteristics of touch interaction on mobile devices, enabling users to quickly operate electronic devices, thus enhancing the convenience of using electronic devices.

### BRIEF DESCRIPTION OF DRAWINGS

FIG. 1 is a flowchart illustrating a file editing processing method according to an embodiment of this application;
FIG. 2 is a first schematic diagram illustrating the application of a method according to an embodiment of this application;
FIG. 3 is a second schematic diagram illustrating the application of a method according to an embodiment of this application;
FIG. 4 is a third schematic diagram illustrating the application of a method according to an embodiment of this application;
FIG. 5 is a fourth schematic diagram illustrating the application of a method according to an embodiment of this application;
FIG. 6 is a fifth schematic diagram illustrating the application of a method according to an embodiment of this application;
FIG. 7 is a sixth schematic diagram illustrating the application of a method according to an embodiment of this application;
FIG. 8 is a seventh schematic diagram illustrating the application of a method according to an embodiment of this application;
FIG. 9 is an eighth schematic diagram illustrating the application of a method according to an embodiment of this application;
FIG. 10 is a structural diagram of an apparatus corresponding to FIG. 1;
FIG. 11 is a structural diagram of an electronic device according to an embodiment of this application; and
FIG. 12 is a structural diagram of an electronic device according to another embodiment of this application.

### DETAILED DESCRIPTION OF EMBODIMENTS

The technical solutions in the embodiments of this application are clearly and fully described herein below with reference to the accompanying drawings in the embodiments of the application. It is apparent that the described embodiments are only a part of the embodiments of the application, not all embodiments. Based on the embodiments in this application, all other embodiments obtained by a person of ordinary skill in the art without creative work shall fall within the protection scope of this application.

The terms "first", "second", and the like in the description and claims of this application and the above figures are used to distinguish similar objects, not necessarily to describe a specific sequence. It should be understood that the terms so used are interchangeable under appropriate circumstances and that the embodiments of the application described herein can be operated in sequences other than those described or illustrated herein. In addition, "first" and "second" are typically used to distinguish between objects of a same type but do not limit quantities of the objects. For example, there may be one or more first objects. In addition, in this specification and claims, "and/or" indicates at least one of the connected objects, and the character "/" generally indicates an "or" relationship between the contextually associated objects.

The file editing processing method provided by the embodiments of this application is described in detail below in conjunction with specific embodiments and application scenarios.

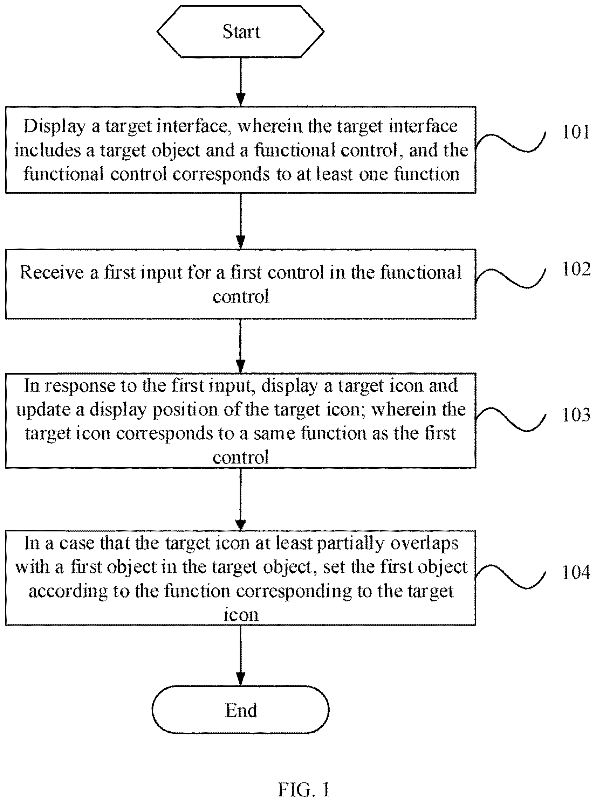

As shown in FIG. 1, a file editing processing method according to an embodiment of this application includes the following steps.

Step 101. Display a target interface, where the target interface includes a target object and a functional control, and the functional control corresponds to at least one function.

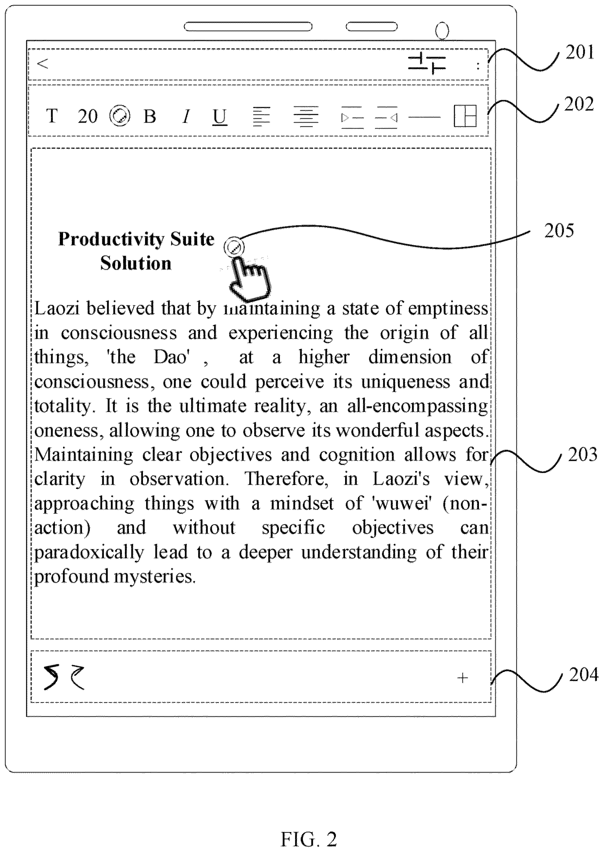

Here, the target interface is a file editing interface, as shown in FIG. 2, including a settings area 201, an editing function area 202, a content area 203, another function area 204, and the like. The target object corresponds to a current file under editing, which can be text, images, tables, documents, recordings, and the like. The target object is located in the content area 203 of the target interface. The functional control is used for setting the current file under editing, such as font, font size, text background color, bold, italic, and other functional controls in the editing function area 202.

Step 102. Receive a first input for a first control in the functional control.

Here, the first input is the user's operation of selecting at least one functional control. For example, as shown in FIG. 2, the user selects at least one functional control in the editing function area 202 (such as lighting tapping a function item of adding text background color), which is the first input. Certainly, the first input can be selection of multiple editing functions.

Step 103. In response to the first input, display a target icon and update a display position of the target icon; where the target icon corresponds to a same function as the first control.

In this step, the electronic device responds to the received first input by displaying a target icon and updating a display position of the target icon for subsequent execution based on the target icon. Here, the number of first controls can be one or more. When the first input corresponds to the user selecting one functional control, the target icon is displayed as a preset associated icon, for example, as shown in FIG. 2, corresponding to the user's first input of selecting the function item of adding text background color, the target icon 205 is displayed; when the first input corresponds to the user selecting multiple functional controls, a target icon is generated in combination with each functional control and displayed.

Step 104. In a case that the target icon at least partially overlaps with a first object in the target object, set the first object according to the function corresponding to the target icon.

Here, the first object is determined based on the position where the target icon overlaps with the target object. Taking text in the content area as an example, it is supposed that the content area text is determined by paragraph as the first object, such as dragging the target icon into the content area. When the target icon is within the position range of the first paragraph, the first paragraph is the first object; when the target editing icon is within the position range of the second paragraph, the first object changes to the second paragraph, and so on. Certainly, for the text in the content area, the unit of a single object can also be a single sentence, and for the entire file, the unit of a single object can also be a single picture, table, document, recording, and the like.

In this step, based on the display position of the target icon, the first object is set according to the function corresponding to the target icon.

Thus, according to the above steps, the electronic device first displays a target interface including a target object and a functional control, then, in response to a first input received, for the user-selected first control, displays a target icon and updates a display position of the target icon, and in a case that the target icon at least partially overlaps with the first object in the target object, sets the first object according to a function corresponding to the target icon, that is, the function corresponding to the first control. This takes into account the characteristics of touch interaction on mobile devices, enabling users to quickly operate electronic devices, thus enhancing the convenience of using electronic devices.

In this embodiment, after the displaying a target icon in step 103, and before the updating a display position of the target icon, the method further includes: receiving a fourth input.

The updating a display position of the target icon includes:
in response to the fourth input, updating the display position.

Here, the fourth input is the user's operation of adjusting the position of the target icon, such as dragging the target icon, so that the function corresponding to the first control can be applied to the object the user wishes to target.

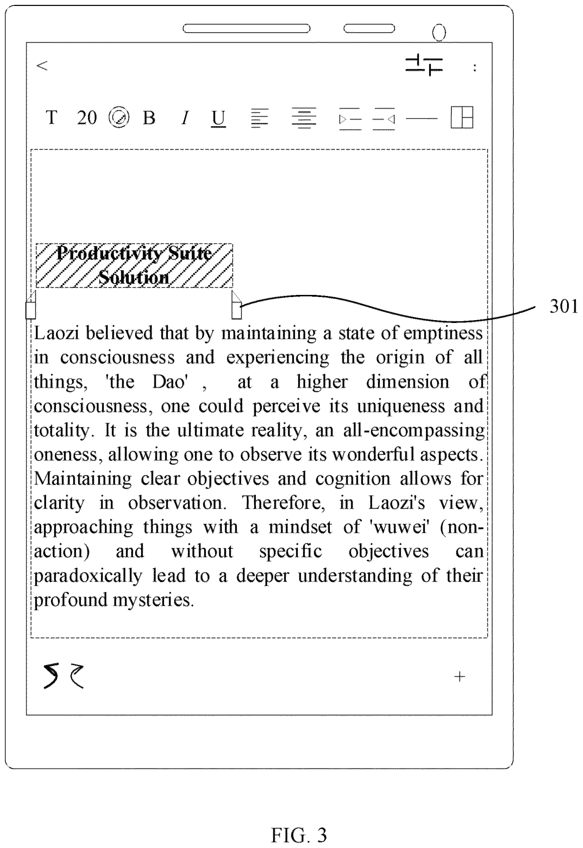

Specifically, as shown in FIG. 2, after the user taps the function item to add text background color (the background color is set to yellow) in the editing function area 202 (the first input), the electronic device responds to the first input by displaying the target icon 205. As shown in FIGs. 2 and 3, the user drags the target editing icon (the fourth input), and the electronic device responds to the fourth input by updating the display position of the target icon 205. When the user's finger is within the position range of the title "Productivity Suite Solution", the title "Productivity Suite Solution" is displayed with a yellow background color; thereafter, if the user's finger continues to move within the position range of the first paragraph, the first paragraph is displayed with a yellow background color, and the title returns to its normal state, and so on.

Optionally, in this embodiment, after step 104, the method further includes:
displaying a selection item;
receiving a fifth input from the user for the selection item; and
in response to the fifth input, determining a second object and canceling a function setting for a part of the first object other than the second object.

That is, when the unit of the first object is relatively coarse, for the adjusted first object, the user can further finely adjust the object of the function setting corresponding to the first control through the selection item.

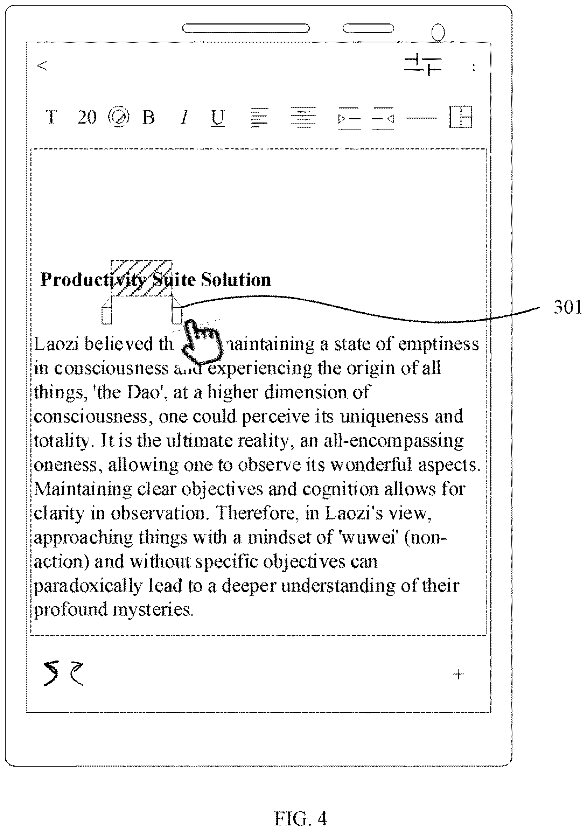

For example, as shown in FIGs. 3 and 4, after the user drags the target icon to the position range of the title "Productivity Suite Solution" and releases it, the electronic device displays the title "Productivity Suite Solution" with a yellow background color. At this time, a selection item 301 is displayed in the edge area of the title "Productivity Suite Solution", which can also be called an adjustment handle. The user drags the selection item 301 (the fifth input), which can further finely select the text range affected by the text background color. Finally, only the "Suite" in the title, that is, the second object, is displayed with a yellow background color.

Additionally, optionally, in this embodiment, after step 104, the method further includes:
receiving a sixth input for the first object; and
in response to the sixth input, displaying a function adjustment interface and performing adjustment based on a function option on the function adjustment interface; where the function adjustment interface includes at least one function option, each function option corresponding to one or more functions.

Here, the sixth input is used to awaken the function adjustment interface, which includes at least one function option, each function option corresponding to predefined or user-defined functions. Therefore, the user can trigger the function option through the function adjustment interface, allowing the electronic device to reset the first object according to a selected function.

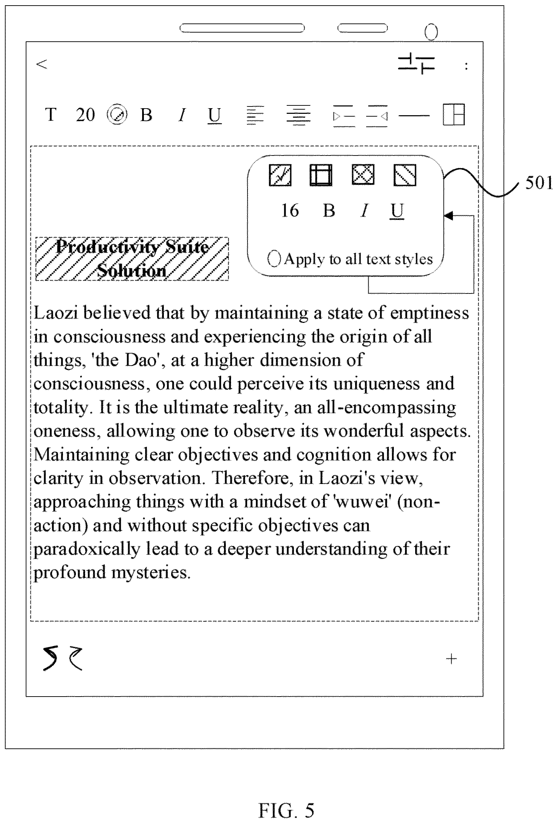

For example, as shown in FIG. 5, the user long presses the title "Productivity Suite Solution" with a yellow background color (the sixth input), calling out the function adjustment interface 501. At this time, the function adjustment interface 501 is displayed as a pop-up window, which includes function options 1 to 4 corresponding to different text background colors, function option 5 corresponding to font size, function option 6 corresponding to bold, function option 7 corresponding to italic, and function option 8 corresponding to text underline. Thus, for the user's selection of function option 2 and function option 6, the electronic device changes the background color of the title "Productivity Suite Solution" and bold the title "Productivity Suite Solution." Certainly, if the user checks the [Apply to all text styles] at the bottom of the function adjustment interface 501, the set function is applied to all text with text styles in the content area.

Furthermore, in this embodiment, the single object in the content area can be considered as an independent part. Optionally, the target object includes N objects, and the target interface further includes N identifiers corresponding to the N objects, after step 101, the method further includes:
receiving a second input for a target identifier in the N identifiers; and
in response to the second input, adjusting an object corresponding to the target identifier to be in a target state; where
in a case that the object is in the target state, the object is editable.

Here, in the target interface, the N identifiers corresponding to the N objects can be called out by the user's input. These N identifiers can display the status of their corresponding objects in different forms, indicating whether they are selected or not.

Thus, in response to the received second input, when the user selects the object corresponding to the target identifier, the target state of the target identifier is the selected state; when the user cancels the selection of an object, the target state of the target identifier changes from the selected state to the unselected state. For the object in the target state, that is, the object selected by the user, the user can continue to edit.

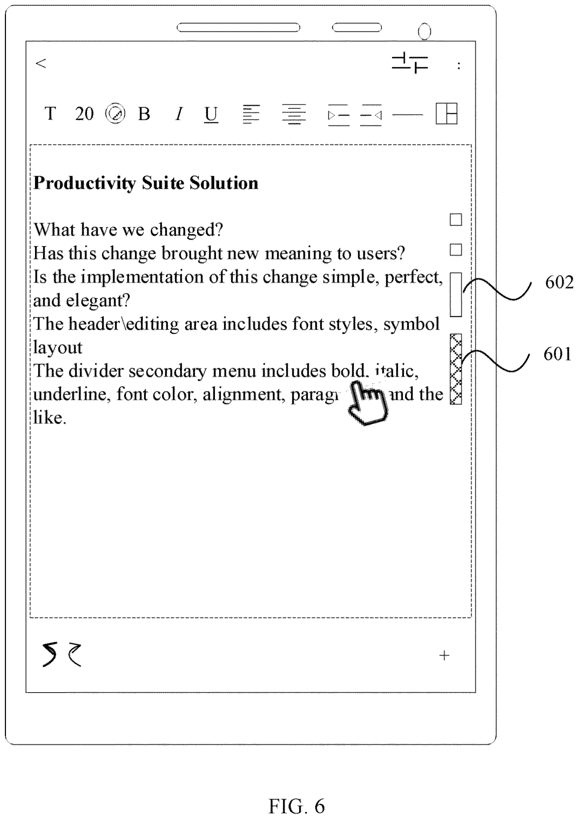

For example, as shown in FIG. 6, after the user swipes left or right within a single paragraph area, identifiers corresponding to all paragraphs appear on the right side of the content area on the electronic device. The user taps or swipes left or right within the fourth paragraph area (the second input), and the first identifier 601 associated with the fourth paragraph is displayed as selected; while the other paragraphs are not selected, the identifiers corresponding to the other paragraphs are displayed as unselected, such as the second identifier 602. Here, the paragraph that is swiped for the first time defaults to the selected state, thereafter, the paragraph is tapped or swiped left or right to cancel the selected state.

For the object in the target state, that is, once a single object (such as a paragraph) is selected, an object adjustment interface for quick operations can be called out. The function items included in this object adjustment interface, also referred to as quick operation controls, allow the user to perform quick operations such as cutting, copying, and deletion on the selected object.

Certainly, the user can also long-press the selected object and drag the object to change its position in the content area.

Additionally, for the selected text object, the user can set the text style through at least one function in the editing function area 202. Certainly, the user can also call out the target icon through the first input and then, based on the selected object, drag the target icon to set the first object.

Optionally, after the adjusting an object corresponding to the target identifier to be in a target state, the method further includes:
receiving a third input for the target identifier; and
in response to the third input, displaying related information of the object corresponding to the target identifier.

Optionally, the related information includes object information of the object corresponding to the target identifier or editing information of the object corresponding to the target identifier.

That is, the third input, which is the user's operation on the target identifier, calls out the related information of the selected object. Here, the related information of the selected object can include the object's creation time, modification time, paragraph word count, and the like.

For example, if the user long-presses the first identifier 601 in FIG. 6, it can display information such as the creation time, the most recent modification time, and the word count of the fourth paragraph.

Optionally, in this embodiment, the first control corresponds to a marking function, and after the updating a display position of the target icon, the method further includes:
in a case that the display position of the target icon is at a target position of the target object, displaying a marker at the target position.

The marker is used to divide context, and the marker is also used to indicate at least one of the following information:
time of inserting the marker;
a position of inserting the marker; and
a position of the marker in the target interface.

That is, based on the display position of the target icon, the electronic device displays a marker at the target position of the target object when the target icon is displayed at the target position, dividing the context. Here, the target position is predefined or user-defined, such as the upper and/or lower position of the target object, dividing the target object from other objects.

Certainly, the marker can be the same as the target icon.

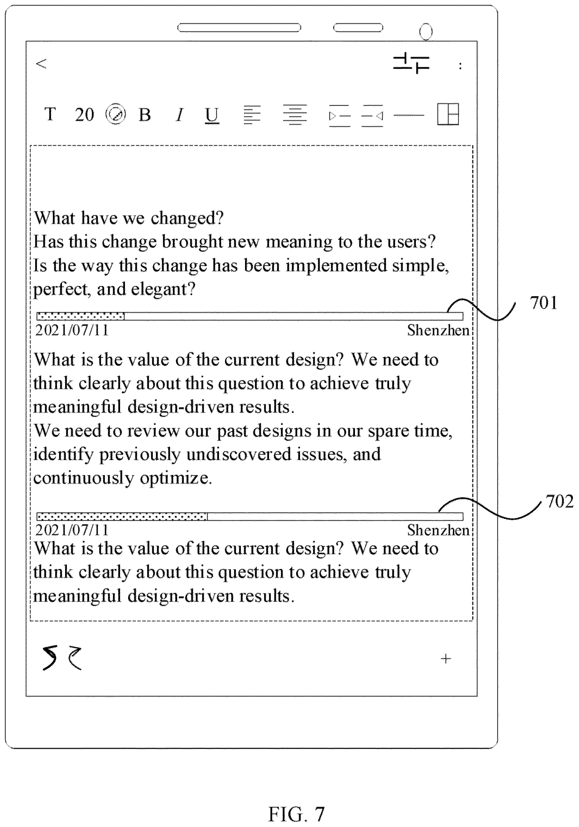

The marker can be a dividing line, dividing the content above and below. The marker can indicate the time of inserting the marker, the position of inserting the marker, and the position of the marker in the target interface through text or graphic information. For example, as shown by the first marker 701 and the second marker 702 in FIG. 7, the position information and time information are located below the dividing line.

Certainly, the marker can be implemented in various forms, which are not further described here.

As for the marker indicating its position in the target interface, the height of the content area of the target interface is considered as the unit of measurement, and the marker has style variables used to indicate the position of the marker. For example, if the marker is in the middle position of the entire content area, the style variable of the marker indicates 50%; if the marker is at the end of the entire content area, the style variable of the marker indicates 100%, and so on. The implementation of the style variable may be a contrast of two colors, the position of a special symbol, a percentage number, and the like.

For example, as shown in FIG. 7, when the user drags the target icon to select the fourth and fifth paragraphs, the first dividing indicator 701 and the second dividing indicator 702 are displayed at the upper position of the fourth paragraph and the lower position of the fifth paragraph (target position), respectively. Moreover, the first marker 701 and the second marker 702 consider the height of the entire content area (display area) as the unit of measurement, indicating their respective positions in the content area by the length contrast between the shadowed and non-shadowed parts separated by the dividing line.

Certainly, the marker can be implemented in various forms, which are not further described herein.

It should be noted that during the entire file editing process, the user can choose to apply the marker to the entire file, such as inserting a marker before and after each paragraph. At this time, after each editing of the content area, the style variables of the marker are refreshed.

Optionally, in this embodiment, the first object is an object of a target type, and the in a case that the target icon at least partially overlaps with a first object in the target object, setting the first object according to the function corresponding to the target icon includes:
displaying a target control in the case that the target icon at least partially overlaps with a first object in the target object; and
in a case that an input for the target control has been received, setting all objects in the target object that are of the same type as the first object according to the function corresponding to the target icon.

Here, the target control is a shortcut control for setting functions for all objects of the same type as the first object. That is, in a case that the target icon at least partially overlaps with the first object in the target object, the electronic device displays the target control, so that the user can perform input for the target control, and based on this input for the target control, all objects in the file of the same type as the target type is set according to the function corresponding to the target icon.

For example, if the target type is an image and the corresponding function of the target icon is centering, in a case that an input for the target template has been received, all images in the current file are set to centering.

Optionally, in this embodiment, the first control corresponds to an object identifier function; and
after the updating a display position of the target icon, the method further includes:
displaying a unit identifier at a corresponding position of each unit in the first object; where the unit is obtained by dividing the first object based on a preset strategy, and the unit identifier is used to indicate a sequential position of the unit in the first obj ect.

That is, corresponding to the first input, that is, when the user selects the object identifier function, the electronic device displays a unit identifier at a corresponding position of each unit in the first object. Here, the position where the unit identifier is added is predefined or user-defined, such as the beginning and/or end of the first object.

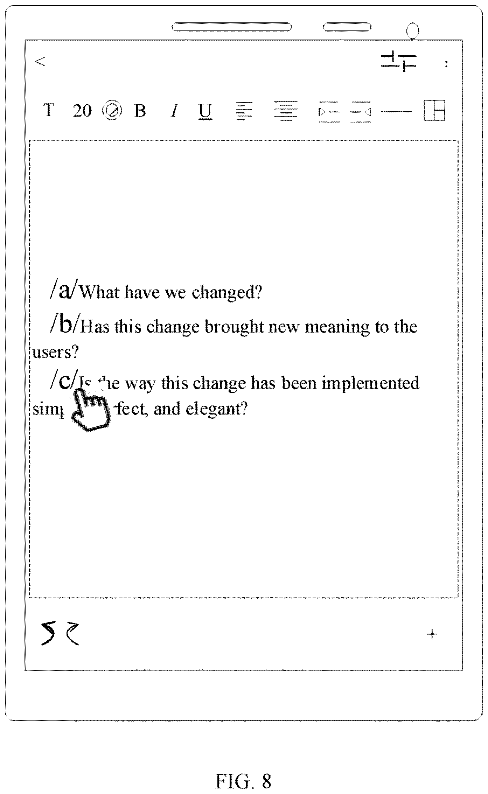

Unit identifiers are a set of identifiers that can indicate sequential positions of units in the first object, such as numbers or letters. After the unit identifiers are inserted into the first object, the unit identifiers change sequentially from top to bottom. Suppose the unit identifiers are set as letters, as shown in FIG. 8, after the first, second, and third paragraphs are selected as the first object, corresponding to the selection of the function including the object identifier function, the first, second, and third paragraphs are each considered as a single unit, and their beginning (second position) is displayed as a, b, and c, respectively.

Optionally, after the unit identifier is displayed at a second position in each unit of the first object, the method further includes:
displaying an identifier adjustment interface in a case that an input for the unit identifier has been received; where the identifier adjustment interface includes at least one adjustment item.

That is, the user can call out the identifier adjustment interface by inputting the unit identifier, allowing the user to further trigger the adjustment item and adjust the display style of the unit identifier. The adjustment item can trigger adjustments to the color, size, and the like, of the unit identifier.

For example, if the user long-presses the unit identifier, the electronic device displays the identifier adjustment interface, which appears as a pop-up window. The user further triggers the adjustment item in the identifier adjustment interface to adjust the color, size, and the like, of the unit identifier. The adjusted unit identifier changes in real-time with the parameters of the adjustment item, and if [Apply to all identifiers] is checked, the adjustment item applies to all unit identifiers within the first object.

Certainly, the user can also tap the unit identifier to activate it, and the user can switch the size of the unit identifier by swiping up and down, and switch the color of the unit identifier by swiping left and right.

It should be noted that during the entire file editing process, the user can choose to apply the unit identifier to the entire file, such as displaying the unit identifier at the beginning of each paragraph. At this time, after each new unit identifier is inserted or a unit identifier at a certain position is deleted, all unit identifiers change accordingly, displaying a new sequence from top to bottom.

Optionally, in this embodiment, the first control corresponds to a template insertion function; and
after the updating a display position of the target icon, the method further includes: inserting a target template; where the target template includes a text area and/or an image area.

Here, a target template including a text area and/or an image area is predefined or user-defined. Corresponding to the first input, when the user selects the template insertion function, the electronic device displays the target template in a case that the display position of the target icon is at a target position of the target object. Here, the target position is predefined or user-defined, such as the upper and/or lower position of the target object.

The text area of the target template can be a pure text area or a text-dominant area; and the image area of the target template can be a pure image area or an image-dominant area.

Optionally, after the inserting a target template, the method further includes:
adjusting a target item of the target template in a case that an input for the target template has been received.

The target item includes at least one of the following:
a style of the target template;
content of the text area; and
content of the image area.

That is, the user can adjust at least one of the style of the target template, the content of the text area, and the content of the image area through input. The adjustment of the style of the target template includes but is not limited to adjusting the color of the target template, adjusting the number of text areas and/or image areas, as well as quick operations such as cutting, copying, and deleting the target text area and/or image area.

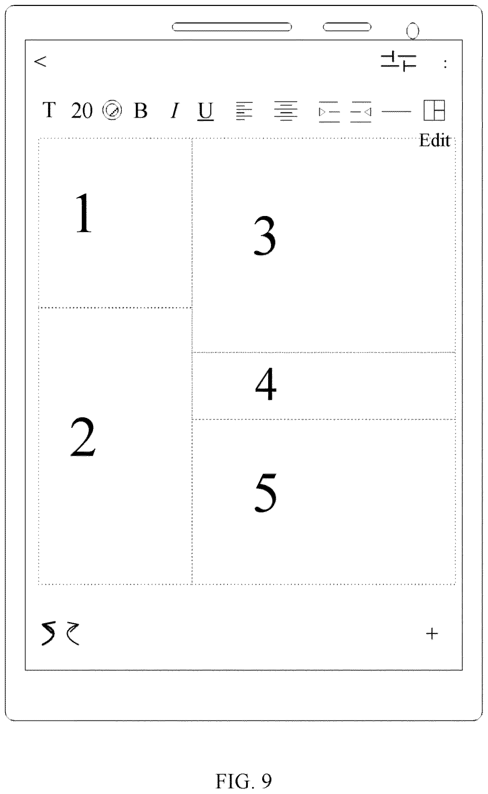

For example, when the user selects the template insertion function, the electronic device inserts the target template at the starting position (target position) of the target object, which includes 5 areas of text area and image area as shown in FIG. 9. The user long-presses the target template, and the target template enters the editing state, calling out the template adjustment interface (displayed as a pop-up window) to adjust the color of the template and the number of areas. The user taps the text area, which is area 1, and inputs text in area 1 to replace the original text content. The user taps the image area, which is area 3, and edits the image in area 3, including changing the image, dragging to adjust the image position, and using two fingers to zoom to adjust the image size.

In summary, the method of this application embodiment fully considers the characteristics of touch interaction on mobile devices and can better meet the user's needs for editing files on mobile devices.

The file editing processing method provided in this application embodiment can be executed by a file editing processing apparatus. In this application embodiment, the file editing processing apparatus executing the file editing processing method is taken as an example to illustrate the file editing processing apparatus provided in this application embodiment.

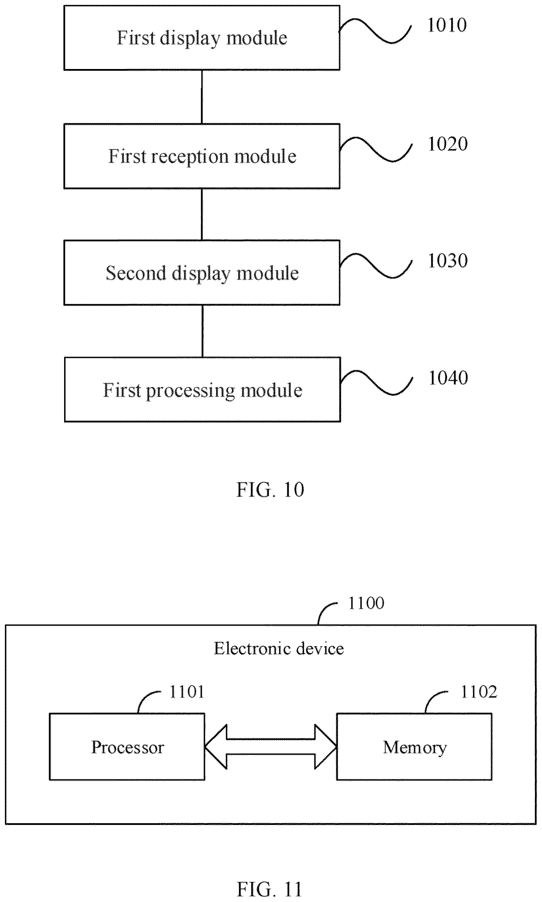

As shown in FIG. 10, a file editing processing apparatus according to an embodiment of this application includes:
a first display module 1010 configured to display a target interface, where the target interface includes a target object and a functional control, and the functional control corresponds to at least one function;
a first reception module 1020 configured to receive a first input for a first control in the functional control;
a second display module 1030 configured to, in response to the first input, display a target icon and update a display position of the target icon; where the target icon corresponds to a same function as the first control; and
a first processing module 1040 configured to, in a case that the target icon at least partially overlaps with a first object in the target object, set the first object according to the function corresponding to the target icon.

The apparatus first displays a target interface including a target object and a functional control, then, in response to a first input received, for the user-selected first control, displays a target icon and updates a display position of the target icon, and in a case that the target icon at least partially overlaps with the first object in the target object, sets the first object according to a function corresponding to the target icon, that is, the function corresponding to the first control. This takes into account the characteristics of touch interaction on mobile devices, enabling users to quickly operate electronic devices, thus enhancing the convenience of using electronic devices.

Optionally, the target object includes N objects, the target interface further includes N identifiers corresponding to the N objects, and the apparatus further includes:
a second reception module configured to receive a second input for a target identifier in the N identifiers; and
a second processing module configured to, in response to the second input, adjust an object corresponding to the target identifier to be in a target state; where
in a case that the object is in the target state, the object is editable.

Optionally, the apparatus further includes:
a third reception module configured to receive a third input for the target identifier; and
a third display module configured to, in response to the third input, display related information of the object corresponding to the target identifier.

Optionally,
the first control corresponds to a marking function, and the apparatus further includes:
a fourth display module configured to, in a case that the display position of the target icon is at a target position of the target object, display a marker at the target position.

The marker is used to divide context, and the marker is also used to indicate at least one of the following information:
time of inserting the marker;
a position of inserting the marker; and
a position of the marker in the target interface.

Optionally, the first object is an object of a target type, and the first processing module includes:
a display submodule configured to, in the case that the target icon at least partially overlaps with a first object in the target object, display a target control; and
a processing submodule configured to, in a case that an input for the target control has been received, set all objects in the target object that are of the same type as the first object according to the function corresponding to the target icon.

The file editing processing apparatus of the embodiments of this application fully considers the characteristics of touch interaction on mobile devices and can better meet the user's needs for editing files on mobile devices.

The apparatus for processing an incoming call display interface in the embodiments of this application can be an electronic device or a component of an electronic device, such as an integrated circuit or chip. The electronic device can be a terminal, or another device other than the terminal. For example, the electronic device may be a mobile phone, a tablet computer, a notebook computer, a palmtop computer, a vehicle-mounted electronic device, a mobile Internet device (Mobile Internet Device, MID), an augmented reality (augmented reality, AR)/virtual reality (virtual reality, VR) device, a robot, a wearable device, an ultra-mobile personal computer (ultra-mobile personal computer, UMPC), a netbook, or a personal digital assistant (personal digital assistant, PDA), and the like, and may alternatively be a server, a network attached storage (Network Attached Storage, NAS), a personal computer (personal computer, PC), a television (television, TV), a teller machine, a self-service machine, or the like. This is not specifically limited in the embodiments of this application.

The file editing processing apparatus in an embodiment of this application may be a file editing processing apparatus having an operating system. The operating system may be an Android operating system, an iOS operating system, or another operating system. This is not specifically limited in the embodiments of this application.

The file editing processing apparatus provided in an embodiment of this application can implement the processes implemented in the method embodiments in FIG. 1 to FIG. 9. To avoid repetition, details are not described herein again.

Optionally, as shown in FIG. 11, an embodiment of this application further provides an electronic device 1100, including a processor 1101, a memory 1102, and a program or instructions stored in the memory 1102 and capable of running on the processor 1101, where when the program or instructions are executed by the processor 1101, the processes of the foregoing file editing processing method embodiment are implemented, with the same technical effects achieved. To avoid repetition, details are not described herein again.

It should be noted that the electronic device in an embodiment of this application includes the foregoing mobile electronic device and non-mobile electronic device.

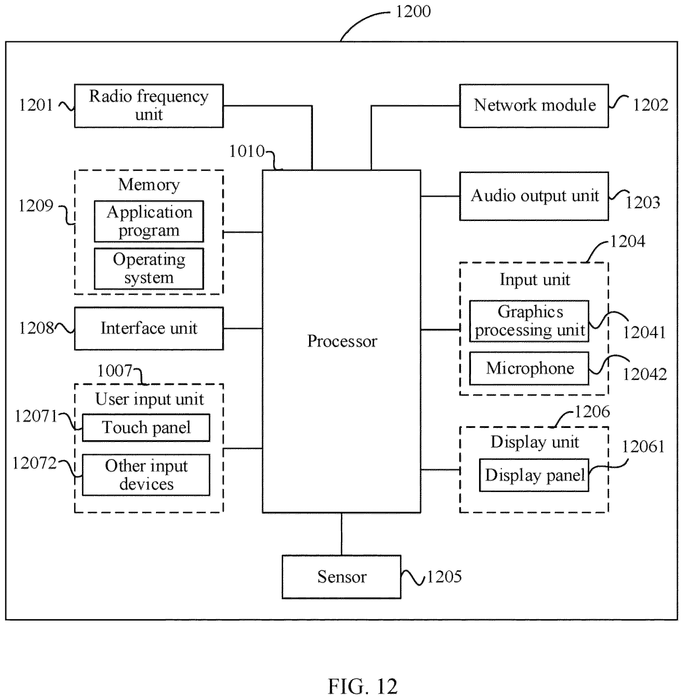

FIG. 12 is a schematic diagram of a hardware structure of an electronic device according to an embodiment of this application.

The electronic device 1200 includes but is not limited to components such as a radio frequency unit 1201, a network module 1202, an audio output unit 1203, an input unit 1204, a sensor 1205, a display unit 1206, a user input unit 1207, an interface unit 1208, a memory 1209, and a processor 1210.

It can be understood by those skilled in the art that the electronic device 1200 may further include a power supply (for example, a battery) supplying power to the components. The power supply may be logically connected to the processor 1210 via a power management system, so that functions such as charge management, discharge management, and power consumption management are implemented via the power management system. The structure of the electronic device shown in FIG. 12 does not constitute a limitation on the electronic device. The electronic device may include more or fewer components than shown in the drawing, or combine some of the components, or arrange the components differently. Details are not described herein again.

The display unit 1206 is configured to display a target interface, where the target interface includes a target object and a functional control, and the functional control corresponds to at least one function.

The input unit 1204 is configured to receive a first input for a first control in the functional control.

The display unit 1206 is configured to, in response to the first input, display a target icon and update a display position of the target icon, where the target icon corresponds to a same function as the first control.

The processor 1210 is configured to, in a case that the target icon at least partially overlaps with a first object in the target object, set the first object according to the function corresponding to the target icon.

First, the electronic device displays a target interface including a target object and a functional control, then, in response to a first input received, for the user-selected first control, displays a target icon and updates a display position of the target icon, and in a case that the target icon at least partially overlaps with the first object in the target object, sets the first object according to a function corresponding to the target icon, that is, the function corresponding to the first control. This takes into account the characteristics of touch interaction on mobile devices, enabling users to quickly operate electronic devices, thus enhancing the convenience of using electronic devices.

Optionally, the target object includes N objects, and the target interface further includes N identifiers corresponding to the N objects.

The input unit 1204 is further configured to receive a second input for a target identifier in the N identifiers.

The processor 1210 is further configured to, in response to the second input, adjust an object corresponding to the target identifier to be in a target state.

In a case that the object is in the target state, the object is editable.

Optionally, the input unit 1204 is further configured to receive a third input for the target identifier.

The display unit 1206 is further configured to, in response to the third input, display related information of the object corresponding to the target identifier.

Optionally, the first control corresponds to a marking function, and
the display unit 1206 is further configured to, in a case that the display position of the target icon is at a target position of the target object, display a marker at the target position.

The marker is used to divide context, and the marker is also used to indicate at least one of the following information:
time of inserting the marker;
a position of inserting the marker; and
a position of the marker in the target interface.

Optionally, the first object is an object of a target type.

The display unit 1206 is further configured to, in the case that the target icon at least partially overlaps with a first object in the target object, display a target control.

The processor 1210 is further configured to, in a case that an input for the target control has been received, set all objects in the target object that are of the same type as the first object according to the function corresponding to the target icon. It should be understood that in the embodiments of this application, the input unit 1204 may include a graphics processing unit (Graphics Processing Unit, GPU) 12041 and a microphone 12042, where the graphics processor 12041 processes image data of static images or videos obtained by an image capture device (such as a camera) in video capture mode or image capture mode. The display unit 1206 may include a display panel 12061, which may be configured as a liquid crystal display, an organic light-emitting diode, and the like. The user input unit 1207 includes at least one of a touch panel 12071 and other input devices 12072. The touch panel 12071, also known as a touch screen, may include a touch detection device and a touch controller. Other input devices 12072 may include but are not limited to a physical keyboard, function keys (such as volume control buttons, switch buttons, and the like.), a trackball, a mouse, a joystick, and the like, which are not further described here.

The memory 1209 can be used for storing a software program and various data. The memory 1209 may mainly include a first storage area storing a program or instructions and a second storage area storing data. The first storage area may store an operating system, an application program or instructions required by at least one function (for example, sound play function or image play function), and the like. The memory 1209 may include a volatile memory or a non-volatile memory, or may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct Rambus random access memory (Direct Rambus RAM, DRRAM). The memory 1209 described in the embodiments of this application is intended to include but is not limited to these and any other suitable types of memories.

The processor 1210 may include one or more processing units. Optionally, the processor 1210 integrates an application processor and a modem processor. The application processor mainly processes an operating system, a user interface, application programs, and the like. The modem processor mainly processes wireless communication, for example, being a baseband processor. It can be understood that a modem processor may alternatively skip being integrated in the processor 1210.

An embodiment of this application also provides a readable storage medium having a program or instructions stored thereon. When the program or instructions are executed by the processor, the processes in the foregoing file editing processing method embodiment are implemented with the same technical effects achieved. To avoid repetition, details are not described herein again.

The processor is the processor in the electronic device in the foregoing embodiments. The readable storage medium includes a computer-readable storage medium such as a computer read-only memory, a random access memory, a magnetic disk, or an optical disc.

Another embodiment of this application provides a chip, where the chip includes a processor and a communication interface, the communication interface is coupled to the processor, and the processor is configured to run a program or instructions to implement the processes of the foregoing file editing processing method embodiments, with the same technical effects achieved. To avoid repetition, details are not described herein again.

It should be understood that the chip mentioned in an embodiment of this application may also be referred to as a system-level chip, a system chip, a chip system, a system-on-chip, or the like.

An embodiment of this application further provides a computer program product, where the program product is stored in a storage medium, and the program product is executed by at least one processor to implement the processes of the foregoing embodiments of the file editing processing method, with the same technical effects achieved. To avoid repetition, details are not described herein again.

It should be noted that in this specification, the terms "comprise" and "include", or any of their variants are intended to cover a non-exclusive inclusion, such that a process, method, article, or apparatus that includes a series of elements includes not only those elements but also other elements that are not expressly listed, or further includes elements inherent to such process, method, article, or apparatus. Without more restrictions, an element preceded by the statement "includes a..." does not preclude the presence of other identical elements in the process, method, article, or apparatus that includes the element. Furthermore, it should be noted that the scope of the method and apparatus in the embodiments of this application is not limited to performing the functions in the order shown or discussed, but may also include performing the functions in a substantially simultaneous manner or in a reverse order depending on the functions involved. For example, the described method may be performed in an order different from the order described, and steps may be added, omitted, or combined. In addition, features described with reference to some examples may be combined in other examples.

According to the description of the foregoing embodiments, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is an example embodiment. Based on such an understanding, the technical solutions of this application essentially, or the part contributing to the prior art may be implemented in a form of a computer software product. The computer software product is stored in a storage medium (for example, a ROM/RAM, a magnetic disk, or an optical disc), and includes several instructions for instructing a terminal (which may be a mobile phone, a computer, a server, a network device, or the like) to perform the method described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other forms without departing from the principle of this application and the protection scope of the claims, and all such forms fall within the protection scope of this application.

## Claims

1. A file editing processing method, comprising:
displaying a target interface, wherein the target interface comprises a target object and a functional control, and the functional control corresponds to at least one function;
receiving a first input for a first control in the functional control;
in response to the first input, displaying a target icon and updating a display position of the target icon, wherein the target icon corresponds to a same function as the first control; and
in a case that the target icon at least partially overlaps with a first object in the target object, setting the first object according to the function corresponding to the target icon.

2. The method according to claim 1, wherein the target object comprises N objects, the target interface further comprises N identifiers corresponding respectively to the N objects, and after the displaying a target interface, the method further comprises:
receiving a second input for a target identifier in the N identifiers; and
in response to the second input, adjusting an object corresponding to the target identifier to be in a target state; wherein
in a case that the object is in the target state, the object is editable.

3. The method according to claim 2, wherein after the adjusting an object corresponding to the target identifier to be in a target state, the method further comprises:
receiving a third input for the target identifier; and
in response to the third input, displaying related information of the object corresponding to the target identifier.

4. The method according to claim 1, wherein the first control corresponds to a marking function, and after the updating a display position of the target icon, the method further comprises:
in a case that the display position of the target icon is at a target position of the target object, displaying a marker at the target position; wherein
the marker is used to divide context, and the marker is also used to indicate at least one of the following information:
time of inserting the marker;
a position of inserting the marker; and
a position of the marker in the target interface.

5. The method according to claim 1, wherein the first object is an object of a target type, and the in a case that the target icon at least partially overlaps with a first object in the target object, setting the first object according to the function corresponding to the target icon comprises:
displaying a target control in the case that the target icon at least partially overlaps with a first object in the target object; and
in a case that an input for the target control has been received, setting all objects in the target object that are of the same type as the first object according to the function corresponding to the target icon.

6. A file editing processing apparatus, comprising:
a first display module configured to display a target interface, wherein the target interface comprises a target object and a functional control, and the functional control corresponds to at least one function;
a first reception module configured to receive a first input for a first control in the functional control;
a second display module configured to, in response to the first input, display a target icon and update a display position of the target icon, wherein the target icon corresponds to a same function as the first control; and
a first processing module configured to, in a case that the target icon at least partially overlaps with a first object in the target object, set the first object according to the function corresponding to the target icon.

7. The apparatus according to claim 6, wherein the target object comprises N objects, the target interface further comprises N identifiers corresponding respectively to the N objects, and the apparatus further comprises:
a second reception module configured to receive a second input for a target identifier in the N identifiers; and
a second processing module configured to, in response to the second input, adjust an object corresponding to the target identifier to be in a target state; wherein
in a case that the object is in the target state, the object is editable.

8. The apparatus according to claim 7, further comprising:
a third reception module configured to receive a third input for the target identifier; and
a third display module configured to, in response to the third input, display related information of the object corresponding to the target identifier.

9. The apparatus according to claim 6, wherein the first control corresponds to a marking function, and the apparatus further comprises:
a fourth display module configured to, in a case that the display position of the target icon is at a target position of the target object, display a marker at the target position; wherein
the marker is used to divide context, and the marker is also used to indicate at least one of the following information:
time of inserting the marker;
a position of inserting the marker; and
a position of the marker in the target interface.

10. The apparatus according to claim 6, wherein the first object is an object of a target type, and the first processing module comprises:
a display submodule configured to, in the case that the target icon at least partially overlaps with a first object in the target object, display a target control; and
a processing submodule configured to, in a case that an input for the target control has been received, set all objects in the target object that are of the same type as the first object according to the function corresponding to the target icon.

11. An electronic device, comprising a processor and a memory, wherein the memory stores a program or instructions capable of running on the processor, and when the program or instructions are executed by the processor, the steps of the file editing processing method according to any one of claims 1 to 5 are implemented.

12. A readable storage medium, wherein the readable storage medium stores a program or instructions, and when the program or the instructions are executed by a processor, the steps of the file editing processing method according to any one of claims 1 to 5 are implemented.

13. A chip, wherein the chip comprises a processor and a communication interface, the communication interface is coupled to the processor, and the processor is configured to execute a program or instructions to implement the steps of the file editing processing method according to any one of claims 1 to 5.

14. A computer program product, wherein the computer program product is stored in a non-transient storage medium, and the computer program product is executed by at least one processor to implement the steps of the file editing processing method according to any one of claims 1 to 5.

15. An electronic device, wherein the electronic device is configured to perform the steps of the file editing processing method according to any one of claims 1 to 5.
